# EUROPEAN PATENT APPLICATION

(11) **EP 2 149 960 A1**
(43) Date of publication of application: **03.02.2010**
(21) Application number: 08013708.6
(22) Date of filing: 31.07.2008
(51) Int. Cl.: H02J 17/00

(54) **Electrical appliance with improved efficiency**

(71) Applicant: Electrolux Home Products Corporation N.V., 1930 Zaventem (BE)
(72) Inventor: Rubert, Michele, 31029 Vittorio Veneto (TV) (IT)
(74) Representative: Markovina, Paolo

(57) **Abstract**

Electrical appliance (1), comprising a casing (2) provided with a power supply (3) adapted for supplying, via an electric connection, the electric power to one or more electrical devices (4) of the electrical appliance (1) and comprising at least one inductive element (5) generating a variable leakage magnetic field while the power supply (3) is operating. The electrical appliance (1) comprises at least one first electric coil (6) arranged to electromagnetically interact with the variable leakage magnetic field, so as to induce in the first electric coil (6) an electric current adapted to feed at least a further electrical device (8, 18, 20, 21, 22).

## Description

The present invention refers to an electrical appliance, particularly a household appliance, for example a refrigerator, a washing and/or drying machine, an oven, a dishwasher, a vacuum cleaner, etc.

Nowadays the control of the operative functions of the household appliances (e.g. the achieving of the desired temperature inside a refrigerator, the application of a particular washing cycle in a washing machine, etc) is more and more frequently achieved by an electronic controller comprising an electronic control system cooperating with a user interface, which can be an electronic device (such as a touch-screen display) or an electromechanical device (such as a potentiometer); the electronic control system and the user interface are sometimes integrated in a same electronic board.

Both for cost-saving and space-saving reasons, the power supply of the electronic controller is usually integrated within the control system of the electronic board.

The power supplying for the electronic controller is sometimes obtained by regulating an input voltage, coming from the electric grid, by the so called switching-mode power supply (named also switched-mode power supply or SMPS), which is an electronic power supply unit that typically incorporates a switching regulator; the switching regulator is designed to rapidly switch a an electronic component, such as a transistor or a MOSFET between a full-on condition and a completely-off condition, in order to drive a proper electronic circuit and to provide the desired average output voltage, adapted to feed the electronic controller.

The electronic circuit of the switching-mode power supply typically comprises an inductive element (i.e. an electric component -typically an inductor or a transformer- adapted to generate a magnetic field when an electric current flows in it), in which some energy is ciclically stored and then released to the output; in some cases the inductive element is also used as a filter to reduce the ripple of the output voltage.

Today's switching mode power supplies have great efficiency, small size, light weight, and low heat generation, so they are more and more frequently used as power supply for the household appliances.

Sometimes the power supply of the electronic controller is instead a linear power supply, which is a known type of electric power supply containing a transformer adapted for modifying (usually reducing) the value of the input voltage coming from the electric grid. If it is used to produce a direct current, the linear power supply contains also a rectifier and a capacitor, used to smooth the pulsating current coming out of the rectifier. Sometimes the linear power supply comprises also an inductor used as a filter to reduce the ripple of the output voltage.

Both the above mentioned power supplies (switching mode and linear) are also typically used for feeding other electrical devices comprised in the household appliances, for example electric motors, lamps, heaters, displays, etc.

Both the above mentioned power supplies have however the drawback that during their functioning their inductive elements generate a variable magnetic field, named "leakage magnetic field", which is emitted and wasted in the surrounding environment; for example, in the case of a transformer, the leakage magnetic field is the share of the variable magnetic field produced by the primary coil which fails to link with the secondary coil, and which is therefore wasted in the surrounding environment. In the case of the inductor used in the switching mode or in the linear power supply, the leakage magnetic field is the variable magnetic field generated by the variable current flowing in the inductor during the functioning of the power supply, which is wasted in the surrounding environment.

The leakage magnetic field is a source of electric power losses, which, even if low, reduce the efficiency of the electrical appliance.

Moreover the leakage magnetic field frequently causes electromagnetic interferences with the surrounding electrical devices, which could compromise the correct functioning of the latter.

Nowadays many electrical appliances, particularly the household appliances, comprise movable electrical components which need to be provided of electric power during their functioning; the electrical contact between the movable electrical component and the main wiring system of the electrical appliance is usually provided by creeping contacts or, in the case of components which can be also removed from the appliance, by removable electric connectors.

For example potentiometers are known, used for instance to obtain volume controls knobs in audio appliances, comprising a fixed member, electrically connectable to the main wiring system of the audio appliance, and a movable member which can rotate or slide with respect to the fixed member. The movable member can advantageously be provided with a LED which must be electrically powered during the motion of the moving member. The LED may for example be electrically connected to the fixed member, so as to receive the power supply, by means of a creeping contact.

The above mentioned solutions are affected by some drawbacks; in fact the electrical creeping contacts, and also the removable electric connectors, are subjected to wear, which can jeopardize the effectiveness of the electric contact.

Moreover the creeping or removable electric contacts cannot guarantee a sufficient level of insulation and safety against potentially dangerous electric power dispersions, particularly when there is a high humidity degree, or in the presence of liquids, as it often happens, for instance, in the refrigerators.

In addition the electrical contacts are accessible to the user, with the risk that the latter could accidentally touch them.

In order to partially overcome these drawbacks, it is known the European Patent Application n. EP 1760733, in which it is disclosed a refrigerator comprising a cabinet, provided with a primary electrical circuit connected to a main alternate voltage power supply, and comprising a movable member, associable to the cabinet, provided with a secondary electrical circuit, powered contactlessly by the primary circuit, and supplying electrical energy to a power consuming device.

The primary circuit comprises a first inductor, fixed to the cabinet, comprising a first electric coil wrapped around a first ferromagnetic element; the main power supply comprises an oscillating circuit able to provide the first inductor with an alternate voltage at a pre-set frequency.

The secondary circuit comprises a second inductor, associated with the movable member, comprising a second electric coil wrapped around a second ferromagnetic element and arranged so as to face the first inductor; the electric power is therefore delivered to the secondary circuit by means of the electromagnetic interaction between the first and the second electric coils, without need of a mechanical contact between them.

Also this solution, although effective, involves the drawback that the first inductor and the oscillating circuit are rather expensive, and consequently their application increases the costs of the electrical appliance. In addition the first inductor and the oscillating circuit require a great deal of space to be placed, obliging to increase the dimensions of the electrical device.

Furthermore the magnetic field generated by the first inductor could be a source of electromagnetic interferences.

Moreover the best efficiency in the electrical energy transferred from the primary circuit to the secondary circuit is obtained when the magnetic circuit operates in correspondence or very near to a resonating frequency, which can be obtained by a specific oscillating circuit; this increases the complexity and the costs of this solution.

The aim of the present invention is to increase the electric efficiency of an electrical appliance provided with an electric power supply containing an inductive element which generates a leakage magnetic field during the functioning of the power supply.

Within this aim, another object of the invention is to obtain an electrical appliance in which the electromagnetic interferences due to the "leakage magnetic fields" generated by the inductive element of the electric power supply are reduced.

Another object of the present invention is to achieve the transmission of the electrical power from the main wiring system of an electrical appliance to a movable electrical component, in a totally secure way, without decreasing the electrical efficiency of the electrical appliance, and without increasing the dimensions or the costs of the electrical appliance.

It is therefore an object of the present invention to solve the above-noted problems, thereby doing away with the drawbacks of the cited prior art.

The Applicant has found that by the use of one or more electric coils adapted to magnetically interact with the variable leakage magnetic field naturally generated by an inductive element (e.g. a transformer or an inductor) contained in a power supply of an electrical appliance, so as to induce in each coil a current available to feed one or more electrical devices, it is possible to increase the electrical efficiency of the electrical appliance, and also to reduce the electromagnetical interferences due to the leakage magnetic field, and to deliver the electric power to one or more stationary or movable electrical devices in a cheap and safe way.

In particular, the above-mentioned aim and objects, as well as others that will become better apparent hereinafter, are achieved by an electrical appliance, comprising a casing provided with a power supply adapted for supplying, via an electric connection, the electric power to one or more electrical devices of the electrical appliance, the power supply comprising at least one inductive element generating a variable leakage magnetic field when the power supply is supplying the electric power to the one or more electrical device; the electrical appliance comprises at least one first electric coil arranged to electromagnetically interact with the variable leakage magnetic field, so as induce in the first electric coil an electric current adapted to feed at least a further electrical device.

Preferably the first electric device is connected to the further electrical device by means of one or more electronic devices adapted to convert a variable electrical current induced in the first electric coil in a form suitable to be used by the further electrical device.

Opportunely the first electric coil and the further electrical device are stationary associated with the casing, the first electric coil being also in a stationary position with respect to the variable leakage magnetic field.

Advantageously the first electric coil is disposed with its axis substantially aligned to the axis of the inductive element.

In a further embodiment, the electrical appliance comprises at least a second electric coil arranged to electromagnetically interact with the variable leakage magnetic field generated by the inductive element so as to induce in the second electric coil an electric current, the second electric coil cooperates with a regulation device adapted to selectively shield a variable part of the second electric coil from the variable leakage magnetic field, so as to reduce or enhance selectively the electric current induced in the second electric coil.

Advantageously the second electric coil is electrically connected to an electronic logic controller, stationary associated with the casing and programmed to execute some specific functions depending on the value of the current induced in the second electric coil so as to control the functioning of one or more electrical devices.

Preferably the one or more electrical devices of the electrical appliance comprises a main electronic board and the electronic logic controller is connected to the main electronic board and is programmed to cause the main electronic board to actuate a prefixed function depending on the value of the current induced in the second electric coil.

Opportunely the regulation device comprises a magnetic shield, supported by an element rotatable with respect to the casing, the magnetic shield being made of a material adapted to reduce the magnetic field traversing it, and shaped and arranged in such a way to overlap a variable portion of the second coil area, depending on the angular position of the rotatable element.

In a further embodiment the regulation device comprises a magnetic shield, supported by a translating element, the magnetic shield being made of a material adapted to reduce the magnetic field traversing it, and shaped and arranged in such a way to overlap a different rate of the second coil area, depending on the position of the translating element.

In another possible embodiment, one or more of the first electric coils and one or more of the further electrical devices are associated with a movable element, movable to make the one or more first electric coils to selectively overlap the inductive element, so as to induce, in the first electric coil overlapping the inductive element, an electric current adapted to feed the further electrical device.

Preferably the movable element is rotatable with respect to the inductive element, the rotation of the movable element is adapted to cause the one or more first electric coils to selectively overlap the inductive element.

Opportunely, to the movable element there are associated a plurality of first electric coils positioned with a pattern like spokes radiating from a centre, each one connected to a different further electrical device.

Advantageously the further electrical device comprises one or more LEDs, each one electrically connected to a different first electric coil by means of one or more electronic devices adapted to convert the variable electrical current induced in the first electric coil in a form suitable to feed the respective LED.

In a still different embodiment, the movable element is translating with respect to the inductive element, the translation of the movable element being adapted to cause the one or more first electric coils to selectively overlap the inductive element.

Features and advantages of the present invention will anyway be more readily understood from the description that is given below by way of nonlimiting example with reference to the accompanying drawings, in which:
- **Figure 1** is a schematic view of a first embodiment of an electrical appliance, particularly a refrigerator, according to the invention;
- **Figure 2** is a prospective and an exploded view of some components of the electrical appliance illustrated in Figure 1;
- **Figure 3** is a schematic view of another embodiment of an electrical appliance, particularly a refrigerator, according to the invention;
- **Figure 4** is a prospective an enlarged view of a component of the electrical appliance illustrated in Figure 3;
- **Figure 5** is a prospective and an exploded view of the component illustrated in Figure 4;
- **Figure 6** is a schematic prospective view of some components of a further embodiment of an electrical appliance according to the invention.

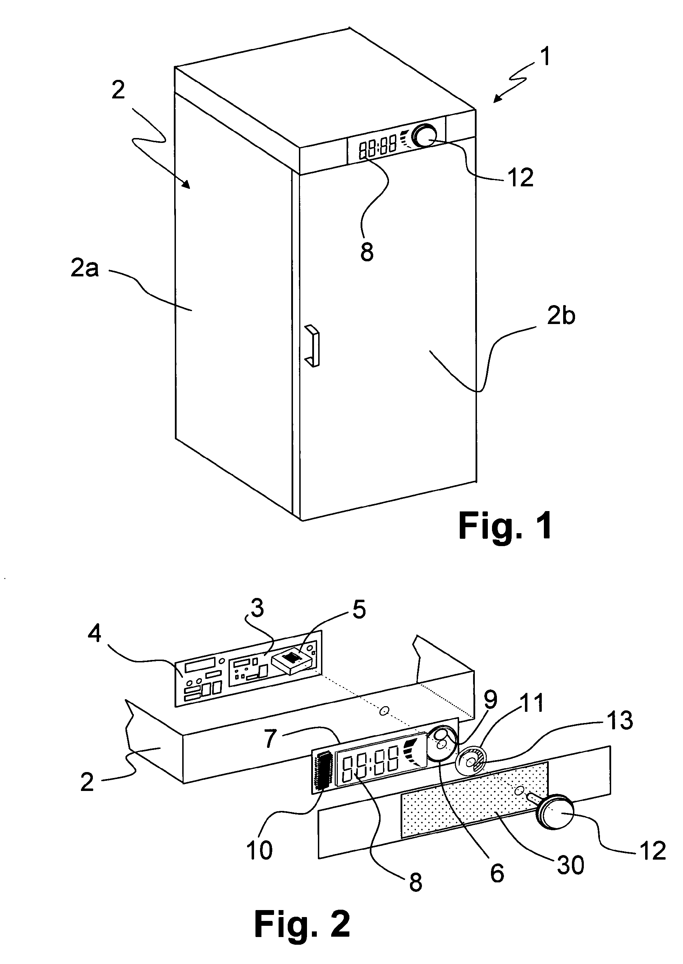

In **Figure 1** is schematically illustrated a first embodiment of an electrical appliance 1, preferably a household appliance, which can be, for example, a refrigerator, a washing and/or drying machine, an oven, a dishwasher, a vacuum cleaner, etc; it must be noted that even if the electrical appliance 1 schematically illustrated in Figure 1 represents a refrigerator, the present invention can easily be applied substantially to any kind of electrical appliances containing at least a power supply comprising an inductive element (e.g. an inductor or a transformer) generating a leakage magnetic field while the power supply is operating.

The electrical appliance 1 comprises a casing 2, preferably comprising an outer casing 2a and a loading/unloading door 2b, in which it is obtained a seat, not illustrated, suitable for containing a power supply (schematically illustrated in figure 2 and indicated with the reference number 3), adapted for supplying the electric power to one or more electrical devices of the electrical appliance 1 via an electric connection.

It must be stressed that the term "electric connection" indicates a wired (that is not wireless) electrical connection.

Advantageously the power supply 3 could be placed either in the outer casing 2a, like in the embodiment illustrated in Figure 1, or in the loading/unloading door 2b. Advantageously, with reference to the embodiment schematically illustrated in Figures 1 and 2, the electrical device which is provided of electric power by the power supply 3 could be the electronic controller of the electrical appliance 1, which controls the main functions of the latter; in this case the power supply 3 and the electronic controller could be advantageously integrated in a same main electronic board, schematically illustrated in Figure 2 and indicated with the reference number 4.

In a further embodiment, not illustrated, the power supply 3 could be adapted to deliver the electric power to other electrical devices comprised in the electrical appliance 1, for instance an electric compressor, a LED (light emitting diode), etc.

The power supply 3 comprises at least one inductive element 5, which is an electric component generating a magnetic field when an electric current flows in it; the inductive element 5 could be, for example, an inductor or a transformer. During the functioning of the power supply 3, the inductive element 5 generates a variable leakage magnetic field, due to the variable current flowing in it, which is emitted in the surrounding environment.

The inductive element 5 illustrated in the embodiment represented in the enclosed Figures is advantageously an inductor.

The power supply 3 could be, for example, a switching-mode power supply adapted for connecting the electrical appliance 1 to the main wire (not illustrated) of the building in which the electrical appliance 1 is placed, and to convert the input sinusoidal voltage and current to a form in which they can be utilized by the electrical devices fed by the power supply 3. In this case the inductive element 5 could be an inductor or a transformer adapted to operate at high frequency (typically in the range 1 kHz-1 MHz).

In another embodiment, not illustrated, the power supply 3 could be another kind of power supply containing an inductive element 5, for example a linear power supply containing a low-frequency (typically 50-60 Hz) transformer.

Advantageously the electrical appliance 1 according to the invention comprises a first electric coil 6 arranged to electromagnetically interact with the variable leakage magnetic field generated by the inductive element 5 of the power supply 3, so as to induce in the first electric coil 6 an electric current adapted to feed at least a further electrical device, which will be described in the following.

The first electric coil 6 and the further electrical device could be positioned in the outer casing 2a (as illustrated in Figures 1 and 2) or in the loading/unloading door 2b.

In the embodiment illustrated in Figures 1 and 2, the first electric coil 6 is supported by an electronic board 7, stationary associated with the casing 2, preferably in such a way that the first electric coil 6 is disposed with its axis substantially aligned to the axis of the inductor comprised in the inductive element 5, so as to link the most possible leakage magnetic field generated by the latter.

In the embodiment illustrated in Figures 1 and 2, the further electrical device which the first electric coil 6 is adapted to feed comprises advantageously a LCD display 8, adapted to show numbers, letters or other graphic symbols; advantageously the LCD display 8 is supported by the electronic board 7.

Opportunely the further electrical device (in this case the LCD display 8) could be electrically associated with the first electric coil 6 by means of one or more electronic devices, not illustrated in Figure 2, such as a rectifier, an amplifier, or another electronic component of known type adapted to convert the variable electrical current induced in the first electric coil 6 in a form suitable to be used by the further electrical device.

Advantageously, but not necessarily, the electrical appliance 1 illustrated in figure 2 comprises also a second electric coil 9 arranged to electromagnetically interact with the variable leakage magnetic field generated by the inductive element 5, so as to induce in the second electric coil 9 an electric current; preferably the second electric coil 9 is associated with the same electronic board 7 supporting the first electric coil 6, and it is disposed preferably inside the latter, in a off-centre position.

Advantageously the second electric coil 9 is electrically connected to an electronic logic controller 10, for example a microcontroller supported by the electronic board 7, adapted to control the functioning of one or more electrical devices; in the embodiment illustrated in Figure 2, the electronic logic controller 10 is advantageously adapted to control the LCD display 8.

Advantageously the second electric coil 9 cooperates with a regulation device adapted to selectively shield a rate of the second electric coil 9 from the variable leakage magnetic field, so as to reduce or enhance selectively the electric current induced in the second electric coil 9; the electronic logic controller 10 is advantageously programmed to execute some specific functions, for example to modify the images displayed in the LCD display 8, depending on the value of the current induced in the second electric coil 9.

Advantageously, in the embodiment illustrated in Figure 2, the regulation device comprises a rotatable element 11 (e.g. a plastic diskette) associated with a knob 12 rotatable with respect to the electronic board 7, preferably substantially around the axis of the first electric coil 6, and advantageously cooperating with apposite means, not illustrated, adapted for controlling one or more functions of the main electronic board 4, which could comprise, for instance, a potentiometer actuated by the rotation of the knob 12.

To the surface of the rotatable element 11 it is advantageously associated a magnetic shield 13, made of a material adapted to reduce the magnetic field traversing it, for example a ferrite sheet, an aluminium sheet, etc.

The magnetic shield 13 is shaped in such a way to overlap a variable share of the second coil 9 area, depending on the angular position of the rotatable element 11 (and therefore of the knob 12); in this way the share of the variable leakage magnetic field linked by the second electric coil 9 (and therefore the value of the current induced in the latter) could be modified as a function of the angular position of the knob 12.

For example, in the case of a refrigerator, if the knob 12 is adapted for allowing the user to set the temperature inside the refrigerator by a rotation of said knob 12 (to which corresponds a rotation of the potentiometer cooperating with the main electronic board 4), to each angular position of the knob 12 there corresponds a predetermined value of the current induced in the second electric coil 9 and transmitted to the electronic logic controller 10; the electronic logic controller 10 could in this case be programmed for causing the LCD display 8 to show a number indicating the value of the set temperature corresponding to this value of current.

In a further embodiment the electronic logic controller 10 could also be connected to the main electronic board 4 of the electrical appliance 1 and could be programmed in such a way to cause the main electronic board 4 to actuate a prefixed function depending on the value of the current induced in the first electric coil 6, and therefore depending on the angular position of the knob 12; this embodiment of the present invention allows therefore to control some functions of the main electronic board 4 by the rotation of the knob 12, without an electrical connection between the latter and the main electronic board 4 (in this case, therefore, without the potentiometer associated with the knob 12), this avoiding the above mentioned problems related to the creeping electric contacts.

In the embodiment illustrated in Figure 2, the magnetic shield 13 is substantially drop-shaped and arranged around a curved path; depending on the angular position of the knob 12, and therefore of the rotatable element 11, a different zone of the magnetic shield 13 overlaps the second electric coil 9, in such a way to shield a different rate of its area.

In a different embodiment, not illustrated, the magnetic shield 13 could be for example supported by a translating element; in this case the magnetic shield 13 could be shaped and arranged in such a way that it overlaps a different share of the area of the second magnetic coil 9 depending on the position of the translating element.

Advantageously the electronic board 7 supporting the first coil 6, the second coil 9, the LCD display 8, the electronic logic controller 10, and also the magnetic shield 13 could be covered by a suitable screen 30, transparent at least in its region facing the LCD display 8, connected to the casing 2.

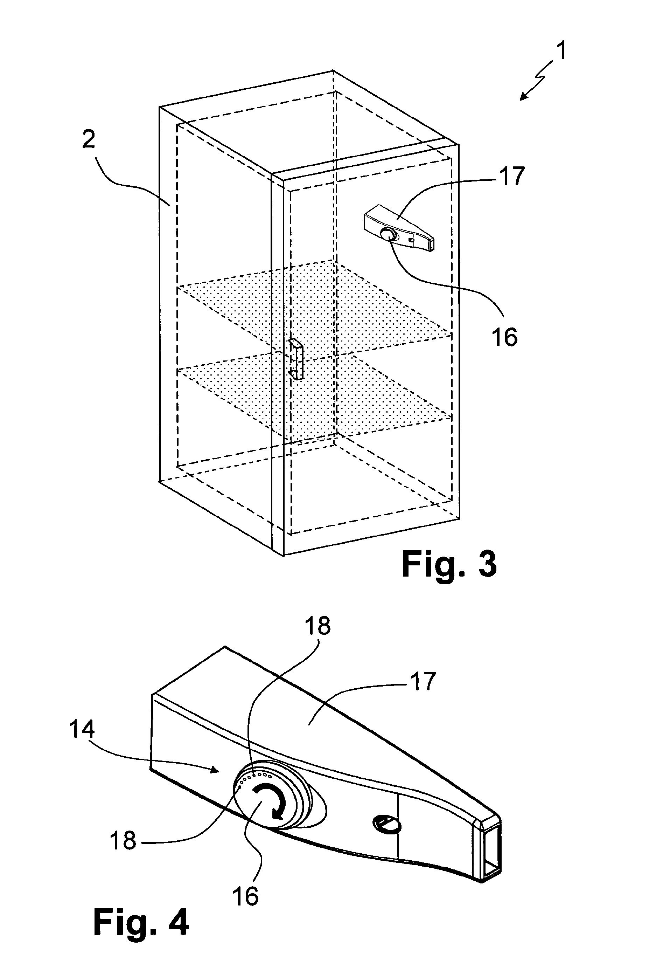

In **Figure 3, 4****,** **5** it is illustrated another embodiment of the present invention.

In this case there are one or more first electric coils 6 associated with a movable element 14 arranged to make said one or more first electric coils 6 to be selectively crossed by the leakage magnetic field generated by the inductive element 5 of the power supply 3, so as to generate, in the first electric coils 6 so crossed, an electric current adapted to feed at least a further electrical device, preferably arranged on the movable element 14, too.

Advantageously the movable element 14 comprises a diskette 15, supported by a knob 16 rotatable with respect to a cover element 17 fixed to the casing 2 of the electrical appliance 1 in such a way as to cover the power supply 3 and preferably also the main electronic board 4.

Advantageously the knob 16 could cooperate with apposite means, not illustrated, adapted for controlling one or more functions of the power supply 3 and/or of the main electronic board 4, which could comprise, for instance, a potentiometer actuated by the rotation of the knob 16.

In the embodiment illustrated in Figures 3, 4 and 5, the plurality of first electric coils 6 associated with the movable element 14 are preferably arranged with a pattern like spokes radiating from a centre.

Advantageously, the further electrical device fed by the current induced in the first electric coils 6 comprises in this case a plurality of LEDs, indicated with the reference number 18; each LED 18 is preferably electrically connected to a different electric coil 6 by means of one or more electronic devices, not illustrated, adapted to convert the variable electrical current induced in said first electric coil 6 in a form suitable to feed the respective LED 18.

Advantageously each LED 18 is placed in a suitable seat 40, obtained in the knob 16, in such a way that the LED 18 is visible from outside the knob 16.

When a first electric coil 6 is crossed by the leakage magnetic field generated by the inductive element 5, in this first electric coil 6 is induced a current which causes the respective LED 18 to switch on; in this way it is set a correlation between the angular position of the knob 16 and the LED 18 which is switched on.

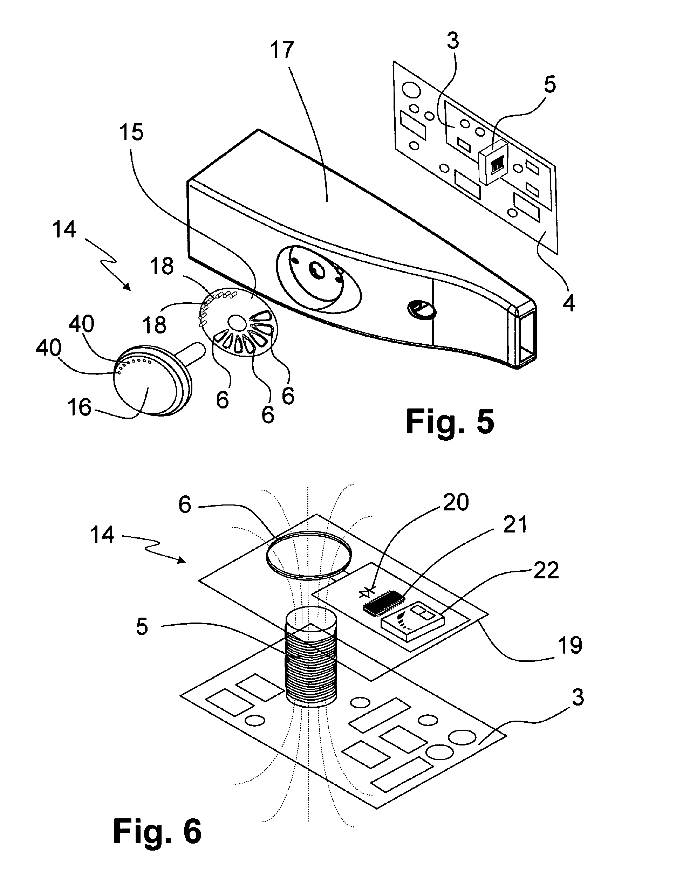

In a further embodiment, schematically illustrated in **Figure 6****,** the movable element 14 comprises a cursor element 19 supporting the first electric coil 6 and the further electrical device and adapted to be translated with respect to the power supply 3, as schematically indicated by the arrows.

In this case the further electrical device advantageously, but not necessarily, comprises a rectifier 20, a microcontroller 21 and an electronic display 22, arranged in such a way to be power supplied by the current induced in the first electric coil 6 when, depending on the position of the cursor element 19, said first electric coil 6 electromagnetically interacts with the variable leakage magnetic field generated by the inductive element 5.

The current induced in the first electric coil 6 depends on the share of the leakage magnetic field crossing the latter, which depends on the reciprocal position of the inductive element 5 and the first electric coil 6; the microcontroller 21 could therefore be programmed to act a different function depending on the value of the electric current induced in the first electric coil 6, which depends on the position of the cursor element 19.

For example the microcontroller 21 could cause the electronic display 22 to show different letters and/or numbers depending on the position of the cursor element 19 with respect to the power supply 3.

In another embodiment, not illustrated, to the cursor 19 there are associated a plurality of first electric coils 6, each one electrically connected to a different further electrical device and arranged in such a way that an electrical current is induced in one of these first electric coils 6 only when they are crossed by the leakage magnetic field generated by the inductive element 5. In this case it is possible to set a correlation between the position of the cursor 19, and the further electrical device which is active at the moment, in a way analogous to the embodiment illustrated with reference to Figures 3, 4 and 5.

In a further embodiment, not illustrated, to the movable element 14 is associated only a first electric coil 6 (and one or more further electrical devices), arranged to electromagnetically interact with the variable leakage magnetic field generated by the inductive element 5, independently from the position of the movable element 14, so as to continuously provide the electric power to the one or more further electrical devices.

The movable element 14, supporting the one or more first electric coil 6 and the one or more further electrical device, could also be arranged in such a way as to be removable from the electrical appliance 1.

It has to be stressed that, when the movable element 14 is applied to the electrical appliance 1, the one or more further electrical devices supported by this movable element 14 are powered by the current flowing in the one or more first electrical coils because of the electromagnetic interaction with the variable leakage magnetic field, without need of a removable electric contact, or creeping contacts, or dedicated wirings, between the movable element 14 and the electrical appliance 1

It is seen therefore how the invention achieves the proposed aim and objects, there being provided an electrical appliance in which the variable leakage magnetic field generated by the inductive element of the power supply electromagnetically interacts with a suitable electric coil, so as to induce in a coil an electric current which can be used to feed a further electrical device.

This has two positive effects.

Firstly, in this way it is possible to use the energy associated with the variable leakage magnetic field, which would otherwise be wasted, to provide power to one or more electric devices without needing a dedicated power supply ; in particular, the possibility to deliver the electric power to one or more electrical devices supported by a movable element (which can be also separated from the electrical appliance) by the electromagnetic interaction of the variable leakage magnetic field with a coil associated with the movable member, allows to avoid the above mentioned problems related to the creeeping and removable electric contacts.

In addition, it reduces the possible electromagnetic interferences due to the leakage magnetic field, because the current induced in the electric coil by the variable leakage magnetic field generates a reaction-magnetic field which has a reducing and shielding effect on the variable leakage magnetic field.

Furthermore, since the leakage magnetic field used to feed a further electrical device is generated by an inductive element which is formerly present in the electrical appliance, it is not necessary to provide a specific feeding system for this further electrical device, thus allowing to optimize both the dimension and the costs of the electrical device.

## Claims

1. Electrical appliance (1), comprising a casing (2) provided with a power supply (3) adapted for supplying, via an electric connection, the electric power to one or more electrical devices (4) of said electrical appliance (1), the power supply comprising at least one inductive element (5) generating a variable leakage magnetic field when said power supply (3) is supplying the electric power to the one or more electrical device (4), **characterised in that** it comprises at least one first electric coil (6) arranged to electromagnetically interact with said variable leakage magnetic field, so as to induce in said first electric coil (6) an electric current adapted to feed at least a further electrical device (8, 18, 20, 21, 22).

2. Electrical appliance (1), according to claim 1, **characterized in that** said first electric coil (6) is connected to said further electrical device by means of one or more electronic devices adapted to convert a variable electrical current induced in said first electric coil (6) in a form suitable to be used by said further electrical device.

3. Electrical appliance (1), according to claim 1 or 2, **characterized in that** said first electric coil (6) and said further electrical device are stationary associated with said casing (2), said first electric coil (6) being also in a stationary position with respect to said variable leakage magnetic field.

4. Electrical appliance (1), according to claim 3, **characterized in that** said first electric coil (6) is disposed with its axis substantially aligned to the axis of said inductive element (5).

5. Electrical appliance (1), according to claim 2, 3 or 4, **characterized in that** it comprises at least a second electric coil (9) arranged to electromagnetically interact with said variable leakage magnetic field generated by said inductive element (5) so as to induce in said second electric coil (9) an electric current, said at least a second electric coil (9) cooperates with a regulation device adapted to selectively shield a variable part of said second electric coil (9) from said variable leakage magnetic field, so as to reduce or enhance selectively the electric current induced in said second electric coil (9).

6. Electrical appliance (1), according to claim 5, **characterized in that** said at least a second electric coil (9) is electrically connected to an electronic logic controller (10), stationary associated with said casing (2) and programmed to execute some specific functions depending on the value of said current induced in said second electric coil (9) so as to control the functioning of one or more electrical devices.

7. Electrical appliance (1), according to claim 6, **characterized in that** said one or more electrical devices (4) of said electrical appliance (1) comprises a main electronic board, and said electronic logic controller (10) is connected to said main electronic board and is programmed to cause said main electronic board to actuate a prefixed function depending on the value of said current induced in said second electric coil (9).

8. Electrical appliance (1), according to any one of claims 5, 6 or 7, **characterized in that** said regulation device comprises a magnetic shield (13), supported by an element (11) rotatable with respect to said casing (2), said magnetic shield (13) being made of a material adapted to reduce the magnetic field traversing it, and shaped and arranged in such a way as to overlap a variable portion of said second coil (9) area, depending on the angular position of said rotatable element (11).

9. Electrical appliance (1), according to any one of claims 5, 6 or 7, **characterized in that** said regulation device comprises a magnetic shield (13), supported by a translating element, said magnetic shield (13) being made of a material adapted to reduce the magnetic field traversing it, and shaped and arranged in such a way to overlap a different share of said second coil (9) area, depending on the position of said translating element.

10. Electrical appliance (1), according to claim 1, **characterized in that** one or more of said first electric coils (6) and one or more of said further electrical devices are associated with a movable element (14), movable to make said one or more first electric coils (6) to selectively overlap said inductive element (5), so as to induce, in the first electric coil (6) overlapping said inductive element (5), an electric current adapted to feed said further electrical device.

11. Electrical appliance (1), according to claim 10, **characterized in that** said movable element (14) is rotatable with respect to said inductive element (5), the rotation of said movable element (14) is adapted to cause said one or more first electric coils (6) to selectively overlap said inductive element (5).

12. Electrical appliance (1), according to claim 11, **characterized in that** to said movable element (14) there are associated a plurality of first electric coils (6) positioned with a pattern like spokes radiating from a centre, each one connected to a different further electrical device.

13. Electrical appliance (1), according to claim 12, **characterized in that** said further electrical device comprises one or more LEDs (18), each one electrically connected to a different first electric coil (6) by means of one or more electronic devices adapted to convert the variable electrical current induced in said first electric coil (6) in a form suitable to feed the respective LED (18).

14. Electrical appliance (1), according to claim 10, **characterized in that** said movable element (14) is translating with respect to said inductive element (5), the translation of said movable element (14) being adapted to cause said one or more first electric coils (6) to selectively overlap said inductive element (5).
